# EUROPÄISCHE PATENTSCHRIFT

(11) **EP 2 686 203 B1**
(45) Veröffentlichungstag und Bekanntmachung des Hinweises auf die Patenterteilung: **17.07.2019**
(21) Anmeldenummer: 12709798.8
(22) Anmeldetag: 14.03.2012
(51) Int. Cl.: B60Q 3/14, B60Q 3/18, B60Q 3/80, B60Q 3/267

(54) **LEUCHTVORRICHTUNG MIT ANIMIERTEM LAUFLICHT FÜR EIN KRAFTFAHRZEUG**
LIGHTING DEVICE WITH ANIMATED RUNNING LIGHT FOR A MOTOR VEHICLE
DISPOSITIF LUMINEUX À LUMIÈRE ANIMÉE POUR UN VÉHICULE À MOTEUR

(30) Priorität: 17.03.2011 DE 102011014262
(43) Veröffentlichungstag der Anmeldung: 22.01.2014
(73) Patentinhaber: Audi AG, 85045 Ingolstadt (DE)
(72) Erfinder: REUSCHEL, Jens Dietmar, 85053 Ingolstadt (DE); SCHMITZ, Christoph, 93326 Abensberg (DE)
(74) Vertreter: Thielmann, Frank
(86) Internationale Anmeldenummer: PCT/EP2012/001131
(87) Internationale Veröffentlichungsnummer: WO 2012/123111

(56) Entgegenhaltungen:
- EP-A2- 2 174 833
- WO-A2-2005/009795
- DE-A1- 10 204 359
- DE-A1-102006 009 636
- DE-A1-102008 064 022
- DE-A1-102009 011 948
- DE-U1- 29 808 949
- US-A1- 2010 302 020
- US-B1- 7 501 939

## Beschreibung

Die vorliegende Erfindung betrifft eine Leuchtvorrichtung für ein Kraftfahrzeug gemäß Anspruch 1.

Die DE 298 08 949 U1 beschreibt einen Detailquerschnitt einer Leuchtvorrichtung mit einer Lichtquelle, die hinter einer teilweise durchleuchtbaren Zierleiste angeordnet ist. Eine Außenseite der Zierleiste ist durch eine lichtdurchlässige Dekorschicht gebildet. Die Dekorschicht ist bis auf einen für die Lichtquelle durchlässigen Bereich rückseitig mit einer lichtundurchlässigen Zwischenschicht versehen.

Die EP 2 174 833 A2 beschreibt eine optische Anzeigevorrichtung für Kraftfahrzeuge mit einer Vielzahl von Lichtquellen, die zumindest teilweise unabhängig voneinander steuerbar sind und zur Ausgabe einer Information an den Kraftfahrzeugführer zusammenwirken.

Die DE 102 04 359 A1 beschreibt eine Trägerfläche, die zwei relativ zueinander verschiebbare Platten umfasst, welche aufeinander liegen. Die Platten sind mit korrespondierenden Transmissionsmustern versehen, durch welche ein von einer Beleuchtungseinrichtung abgegebenes Licht hindurch tritt. Ein Verschieben der Platten zueinander verändert das sich insgesamt ergebende Transmissionsmuster.

Die US 2010/0302020 A1 beschreibt eine längliche Anordnung einer Vielzahl von lichtemittierenden Dioden, die mittels einer lichtdurchlässigen Abdeckung abgedeckt sind.

Die DE 10 2009 011 948 A1 beschreibt eine Anzeigevorrichtung. Ein Anzeigeschirm mit hinterleuchtbaren Zeichen besteht aus einer lichtundurchlässigen Kunststoffmasse, die mit ihrer Rückseite auf der Oberfläche einer Lichtleiterplatte fixiert ist. Durch die transparenten Öffnungen in der lichtundurchlässigen Kunststoffmasse des Anzeigeschirms fällt das Licht von voneinander abgeschirmten Lichtleiterzonen auf die Rückseite des Anzeigeschirms und kann durch Öffnungen abgestrahlt werden, welche eine transparente Kunststoffmasse aufweisen.

Aus der Druckschrift DE 201 03 133 U1 ist eine Hinweisvorrichtung für den Kraftfahrzeugbereich bekannt. Die Hinweisvorrichtung ist mit einem zum Erzeugen eines Schriftbilds, einer Bilddarstellung und/oder einer Zeichenfolge, mindestens einen Durchbruch aufweisenden, zumindest abschnittsweise flachen Trägerelement ausgestattet. Das Trägerelement ist an einer Flachseite mit einer flächigen Leuchteinheit auf Elektrolumineszenz- oder Leuchtpolymerbasis, oder mittels beleuchtetem Acrylglas, zum Bilden einer Hinterleuchtung verbunden. Der Durchbruch ist mit einer für Licht der Leuchteinheit zumindest teilweise durchlässigen Füllmasse, insbesondere einem Gießharz gefüllt.

Kraftfahrzeuge besitzen zur Ausleuchtung des Innenraums in der Regel mehrere Leuchten beziehungsweise Leuchtvorrichtungen. Meist handelt es sich dabei um Lämpchen, die an- oder abgeschaltet werden können. Sie dienen jedoch nicht dazu, zusätzlich Information zu transportieren, die der Fahrzeuginsasse optisch wahrnehmen könnte.

Höherwertige Fahrzeuge besitzen darüber hinaus zahlreiche Überwachungseinrichtungen beziehungsweise Fahrerassistenzsysteme. Diese produzieren Warnsignale, die häufig optisch angezeigt werden. Meist sind hierzu Warnleuchten im Fahrzeuginnenraum vorgesehen. Diese Warnleuchten sind häufig als rein technische Elemente ausgebildet und stören einen optisch ansprechenden Gesamteindruck des Fahrzeuginnenraums.

Die Aufgabe der vorliegenden Erfindung besteht somit darin, eine Leuchtvorrichtung bereitzustellen, mit der nicht nur der Fahrzeuginnenraum beleuchtet, sondern zusätzlich auch Information an einen Fahrzeuginsassen übermittelt werden kann.

Erfindungsgemäß wird diese Aufgabe gelöst durch eine Leuchtvorrichtung für ein Kraftfahrzeug mit
- einer ersten Platte, die eine Unterseite und eine Oberseite aufweist, und
- mehreren Leuchtelementen, die die erste Platte von der Unterseite her beleuchten, wobei
- die erste Platte eine Vielzahl transparenter und nicht transparenter Elemente aufweist, die abwechselnd, aneinander angeordnet sind, und die jeweils vollständig von der Unterseite zu der Oberseite reichen, und
- die Leuchtelemente von einer Steuereinrichtung angesteuert sind und die Steuereinrichtung dazu ausgebildet ist, in einem Raum an der Oberseite der ersten Platte ein vorgebbares örtliches Helligkeitsprofil zu erzielen,
- wobei zwischen den mehreren Leuchtelementen und der ersten Platte eine teiltransparente zweite Platte angeordnet ist.

Der Begriff Helligkeitsprofil wird hier synonym mit dem Begriff Intensitätsverlauf verwendet.

In vorteilhafter Weise kann somit eine Leuchtvorrichtung realisiert werden, die im unbeleuchteten Zustand einen hohen dekorativen Wert besitzt. Im beleuchteten Zustand führen die transparenten und nicht transparenten Elemente zu einer inhomogenen Leuchterscheinung, mit der durch das aufgeprägte Helligkeitsprofil Information übermittelt werden kann. Wird diese Leuchterscheinung auch animiert beziehungsweise bewegt, so führt das zu einem harmonisch wahrgenommenen Leuchterlebnis.

Bei einer Ausführungsform können mindestens zwei der Leuchtelemente unterschiedlicher Farben abstrahlen. Dies bedeutet, dass mit der Leuchtvorrichtung unterschiedliche Farbeffekte erzielt werden können. So können beispielsweise die Leuchtelemente einer ersten Farbe anders angesteuert werden als die Leuchtelemente einer zweiten Farbe. Alternativ können die verschiedenfarbigen Leuchtelemente auch kombiniert oder gleichzeitig miteinander betrieben werden. Somit können Informationen an einen Fahrzeuginsassen auch über die Farbe vermittelt werden.

Darüber hinaus kann mit der Steuereinrichtung die Lichtintensität der einzelnen Leuchtelemente oder von mehreren der Leuchtelemente variierbar sein. Dadurch lassen sich harmonischere Lichteindrücke erzeugen. Außerdem kann mit der Lichtintensität auch Information an den Insassen übermittelt werden.

In einer weiteren Ausführungsform besitzt die Steuereinrichtung einen Eingang zum Aufnehmen eines Sensorsignals, und die Leuchtelemente sind in Abhängigkeit von dem Sensorsignal steuerbar. So können beispielsweise fahrzeugexterne Größen oder fahrzeuginterne Größen über entsprechende Sensorik ermittelt und an die Steuereinrichtung weitergeführt werden. Als fahrzeugexterne Größen können beispielsweise der Abstand von weiteren Verkehrsteilnehmern oder die Geschwindigkeit von anderen Objekten angesehen werden. Fahrzeuginterne Größen wären beispielsweise die Geschwindigkeit, die Drehzahl, der Lenkwinkel, ein Blinkeinschlag und dergleichen. Mit all diesen Größen können die Leuchtelemente über die Steuereinrichtung angesteuert werden.

Des weiteren können die Leuchtelemente mit der Steuereinrichtung so ansteuerbar sein, dass mehrere der Leuchtelemente einen kontinuierlichen Intensitätsverlauf zwischen der Intensität Null und einem vorgebbaren Maximalwert bewirken. Dieser kontinuierliche Intensitätsverlauf kann sowohl örtlich als auch zeitlich verstanden werden. Bei einem örtlich kontinuierlichen Intensitätsverlauf nimmt die Intensität von einem Leuchtelement zum nächsten beispielsweise fortlaufend zu. Bei einem zeitlich kontinuierlichen Intensitätsverlauf nimmt die Intensität eines einzigen Leuchtelements in Abhängigkeit von der Zeit beispielsweise langsam zu.

Weiterhin können die Leuchtelemente mit der Steuereinrichtung so ansteuerbar sein, dass sich ein wellenförmiger Intensitätsverlauf des von den Leuchtelementen abgestrahlten Lichts ergibt. Besonders vorteilhaft ist dann, wenn sich ein vorgebbarer Intensitätsverlauf des von den Leuchtelementen abgestrahlten Lichts in einer Richtung, in der die Leuchtelemente angeordnet sind, zeitlich fortbewegt. Hierdurch lässt sich dann ein animiertes Lauflicht realisieren, das zu einem harmonischen Lichteindruck führt, wenn der Intensitätsverlauf beispielsweise einer Gauß-Kurve entspricht.

Zwischen den mehreren Leuchtelementen und der ersten Platte ist eine teiltransparente zweite Platte angeordnet. Diese erfüllt die Aufgabe, dass das Licht der Leuchtelemente gestreut wird, bevor es in die darüberliegende, geschichtete, erste Platte eintritt. Effekt davon ist, dass die Leuchteinrichtung weniger punktuell wirkt und gegebenenfalls mehrere transparente Streifen von ein und demselben Leuchtelement beleuchtet werden.

Besonders vorteilhaft ist, wenn ein Fahrerassistenzsystem beziehungsweise Kraftfahrzeug mit einer derartigen Leuchtvorrichtung ausgestattet wird. Dabei ist es beispielsweise günstig, die Leuchtvorrichtung mit oder ohne der Steuereinrichtung in einer Tür des Kraftfahrzeugs zu platzieren.

Die vorliegende Erfindung wird nun anhand der beigefügten Zeichnungen näher erläutert, in denen zeigen:
- Fig. 1: eine schematische Ansicht einer Leuchtenvorrichtung;

- Fig. 2: eine Ausführungsform der Leuchtvorrichtung im Querschnitt;
- Fig. 3: einen Intensitätsverlauf an einer linearen Leuchtvorrichtung und
- Fig. 4: einen Intensitätsverlauf an einer gekrümmten Leuchtvorrichtung.

Die nachfolgend näher geschilderten Ausführungsbeispiele stellen bevorzugte Ausführungsformen der vorliegenden Erfindung dar.

Ein Kraftfahrzeug besitzt in seinem Innenraum beispielsweise ein Ambientelicht. Dieses Ambientelicht dient dazu, den Innenraum des Fahrzeugs komfortabel und ansprechend auszuleuchten. Ein Teil der Ambientebeleuchtung kann beispielsweise in der Tür des Kraftfahrzeugs untergebracht sein. Andere Teile der Beleuchtung können am Himmel des Fahrzeugs, an der Mittelkonsole oder an anderen Stellen des Fahrzeuginnenraums angeordnet sein. Hochwertiges Ambientelicht zeichnet sich dadurch aus, dass einerseits ausreichend Helligkeit in Teilbereichen des Fahrzeuginnenraums gewährleistet wird und andererseits die Lichtquelle als solche nicht direkt erkennbar ist. Entsprechend der vorliegenden Erfindung wird nun ein derartiges Ambientelicht mit mehreren Leuchtelementen und einer besonderen Dekorplatte bereitgestellt. Damit steht im beleuchteten Zustand ein hochwertiges Beleuchtungselement und im nicht beleuchteten Zustand ein hochwertiges Dekorelement zur Verfügung.

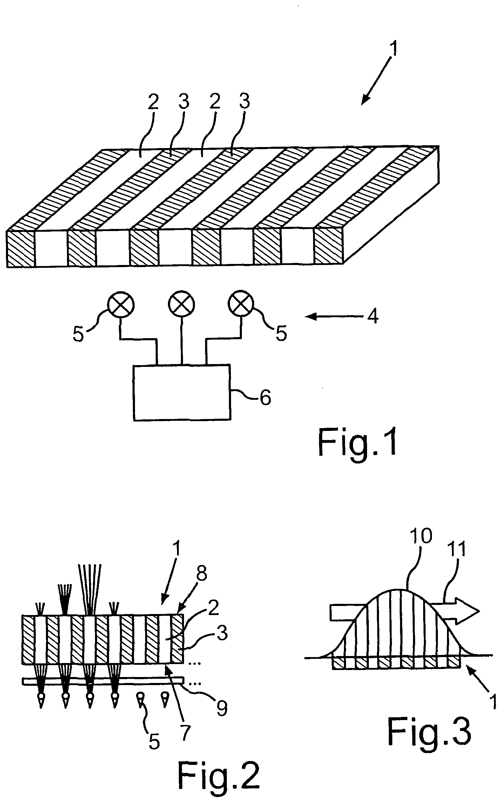

Gemäß dem Beispiel von Fig. 1 besitzt die Leuchtvorrichtung eine erste Platte 1, die im Querschnitt eine Vielzahl an abwechselnd transparenten und nicht transparenten Elementen aufweist. In dem vorliegenden Beispiel werden die transparenten Elemente durch transparente Streifen 2 aus einem transparenten Material und die nicht transparenten Bereiche durch nicht transparente Streifen 3 aus einem nicht transparenten Material gebildet. Die einzelnen Streifen 2, 3 bilden jeweils eine Schicht und ragen jeweils vollständig von der Oberseite der ersten Platte zur Unterseite.

Die Schichten beziehungsweise Streifen 2, 3 sind miteinander untrennbar verbunden. Beispielsweise sind sie fest aneinandergeklebt. Die Stapelrichtung der Schichten verläuft hier senkrecht zur Plattenoberoberseite. Die Stapelrichtung kann aber auch in einem Winkel schräg zur Plattenoberseite verlaufen. Wesentlich ist lediglich, dass eine Leuchteinrichtung 4, die sich auf der Unterseite der ersten Platte 1 befindet, durch die transparenten Elemente hindurch auf die andere Seite der Platte 1 leuchten kann.

Die nicht transparenten Elemente beziehungsweise Streifen 3 können beispielsweise aus Holz hergestellt sein. Sie können aber auch aus einem Metall, z. B. Aluminium oder Stahl gefertigt sein.

Die transparenten Streifen 2 können teiltransparent oder volltransparent sein. Sie sind beispielsweise aus PMMA oder einem anderen Kunststoff hergestellt.

Die Streifen 2, 3, die zu der Platte 1 zusammengefügt sind, können jeweils die gleiche Schichtdicke (parallel zur Plattenoberseite) besitzen. Die Streifen 2, 3 können aber auch unterschiedlich breit sein. So können beispielsweise die transparenten Streifen 2 dicker als die nicht transparenten Streifen 3 sein, oder umgekehrt. Darüber hinaus müssen die nicht transparenten Streifen 3 nicht alle aus dem gleichen Material bestehen. So kann beispielsweise ein nicht transparenter Streifen 3 aus Holz und ein benachbarter beziehungsweise nächster nicht transparenter Streifen 3 aus Aluminium gebildet sein.

In einem weiteren Ausführungsbeispiel befinden sich zwischen zwei transparenten Streifen 2 jeweils zwei nicht transparente Streife 3. Von diesen dazwischen liegenden nicht transparenten Streifen 3 kann beispielsweise einer aus Holz und der andere aus einem Metall bestehen. Hinsichtlich der Schichtung beziehungsweise Aneinanderreihung der Streifen 2, 3 sind also beliebige Kombinationen aus Schichtdicken, Materialen und Reihenfolgen möglich.

Die erste Platte 1 wird hier von einer Leuchteinrichtung 4 beleuchtet. Die Leuchteinrichtung 4 besitzt mehrere Leuchtelemente 5. Jedes dieser Leuchtelemente 5 wird von einer Steuereinrichtung 6 angesteuert. Die Steuereinrichtung 6 steuert die Leuchtelemente 5 so an, dass diese für Beleuchtungszwecke oder im Rahmen einer Assistenzfunktion, wenn der Fahrzeuginsasse aufgrund einer bestimmten Gegebenheit gewarnt werden soll, leuchten und damit Information übermitteln. Dazu besitzt die Steuereinrichtung 6 einen Signaleingang, der in Fig. 1 nicht dargestellt ist. Zusammen mit den Leuchtelementen 5 kann die Steuereinrichtung 6 somit eine Beleuchtungs- oder Warnfunktion realisieren bzw. unterstützen.

Die Leuchtelemente 5 befinden sich in dem Beispiel von Fig. 1 jeweils direkt unter einem transparenten Element bzw. Streifen 2. Dies bedeutet, jedes Leuchtelement 5 ist genau einem einzigen transparenten Streifen 2 zugeordnet. Es bleibt jedoch unbenommen, auch mehreren transparenten Streifen 2 beziehungsweise Elementen jeweils ein Leuchtelement 5 zuzuordnen. Es ist auch nicht notwendig, dass jedem transparenten Streifen 2 ein Leuchtelement 5 zugeordnet wird.

Fig. 2 zeigt einen Schnitt durch die erste Platte 1 von Fig. 1. Es sind die transparenten und nicht transparenten Schichten, hier also die transparenten Streifen 2 und die nicht transparenten Streifen 3 zu erkennen. Die transparenten Streifen 2 und die nicht transparenten Streifen 3 reichen vollständig von der Unterseite 7 zu der Oberseite 8 der ersten Platte 1. Zwischen den Leuchtelementen 5 und der Platte 1 befindet sich eine zweite Platte 9. Diese zweite Platte 9 ist entweder teiltransparent oder im Inneren volltransparent mit angerauter Oberfläche (und damit auch teiltransparent). Erfindungsgemäß ist sie teiltransparent und damit blickdicht. Auf diese Weise können die einzelnen Lichtelemente 5 von der Außenseite von einem Betrachter nicht wahrgenommen werden. Selbst wenn also die transparenten Streifen 2 volltransparent sind, verhindert die teiltransparente Platte 7, dass die Lichtelemente 5 optisch erkannt beziehungsweise genau lokalisiert werden können.

Wie aus Fig. 2 zu erkennen ist, strahlt ein Leuchtelement 5 im Betriebsfall Licht durch die zweite Platte 9, wo es gestreut wird. Das gestreute Licht durchdringt daraufhin einen transparenten Streifen 2 der ersten Platte 1 und dringt dann nach außen, z. B. in den Fahrzeuginnenraum.

In dem Beispiel von Fig. 2 ist jedem transparenten Streifen 2, d. h. jeder transparenten Schicht, ein Leuchtelement 5 zugeordnet. Es können aber auch mehrere transparente Streifen 2 einem Leuchtelement 5 zugeordnet werden.

In den Beispiel von Fig. 2 ist die erste Platte 1 nur mit verhältnismäßig wenigen transparenten und nicht transparenten Elementen dargestellt. Die einzelnen Elemente besitzen in der Richtung parallel zur Plattenoberfläche 8 beispielsweise eine Dicke von 2 bis 3 mm. Insgesamt kann sich die erste Platte 1 beispielsweise über einem größeren Verkleidungsabschnitt einer Kraftfahrzeugtür erstrecken. Die erste Platte kann aber auch sehr länglich ausgebildet sein und sich beispielsweise in Längsrichtung des Fahrzeugs entlang des gesamten Himmels des Fahrzeuginnenraums z. B. als Leuchtleiste erstrecken.

Die obigen Ausführungsbeispiele weisen alle transparente und nicht transparente Streifen beziehungsweise Schichten auf. Anstelle der Streifen 2, 3 kann die erste Platte 1 auch aus anderen geometrischen Körpern beziehungsweise Elementen gebildet werden. Sie kann beispielsweise aus vieleckigen Prismen oder Zylindern, die sich vollständig von der Unterseite zur Oberseite der Platte erstrecken, gebildet sein. Die Zwischenräume zwischen den Prismen beziehungsweise Zylindern werden dann beispielsweise aus einem nicht transparenten Material gefertigt.

In Fig. 2 ist angedeutet, dass nicht sämtliche Leuchtelemente mit gleicher Intensität leuchten. Mit der Steuereinrichtung 6 ist die Intensität jedes einzelnen Leuchtelements 5 individuell steuerbar. Insbesondere ist die Intensität und gegebenenfalls auch die Lichtfarbe (z. B. bei einer mehrfarbigen LED) variierbar. Die einzelnen Leuchtelemente 5 sind entweder einzelne Lichtquellen (z. B. LEDs), oder LED-Gruppen oder -Bänder und können durch Ansteuerung verschiedene Lichtverläufe beziehungsweise Intensitätsverläufe darstellen.

In dem Beispiel von Fig. 3 ist ein Schnappschuss eines Intensitätsverlaufs 10 über einer ersten Platte 1 schematisch dargestellt. Zu einem bestimmten Zeitpunkt befindet sich also die dargestellte Intensitätsverteilung an einem bestimmten Ort der ersten Platte 1. Konkret kann die Intensitätsverteilung 10 beispielsweise in etwa einer Gauß- bzw. Normalverteilung entsprechen.

Die Leuchtelemente 5 der erfindungsgemäßen Leuchtvorrichtung werden nun so angesteuert, dass sich die Intensitätsverteilung 10 beispielsweise in der in Fig. 3 eingezeichneten Richtung 11 parallel zur Anordnung der Leuchtelemente 5 zeitlich fortbewegt. Damit entsteht ein Lauflicht mit sehr harmonischen Flanken. Prinzipiell können die Flanken der Intensitätsverteilung auch sehr steil sein, wenn die betreffenden Leuchtelemente 5 nur ein- und ausgestaltet werden, d. h. die Intensität nur binär variiert wird. Auch damit lässt sich durch entsprechende zeitliche Ansteuerung der Leuchtelemente ein Lauflicht realisieren.

Auf diese Weise kann beispielsweise ein Lauflicht erzeugt werden, das sich entlang der Innenseite einer Tür z. B. in Fahrtrichtung oder gegen die Fahrtrichtung bewegt. Dies kann für den Fahrer ein Hinweis sein, dass sich beispielsweise von hinten ein Radfahrer nähert (siehe unten beschriebene Fahrerassistenzsysteme). In diesem Beispiel hätte die Steuereinrichtung zum Ansteuern der Leuchtelemente z. B. von einem Radarsensor ein entsprechendes Sensorsignal erhalten, dass das Vorbeifahren oder die Präsenz eines Fahrradfahrers signalisiert.

Die Steuereinrichtung 6 zum Steuern der Leuchtelemente 5 kann mit einem oder mehreren Fahrzeugsensoren zum Auslösen oder Steuern eines animierten Lauflichts gekoppelt sein. Sie kann aber auch beispielsweise mit einer oder mehreren Kameras gekoppelt sein, die beispielsweise einen Überholvorgang auflösen können.

Durch die nicht transparenten Schichten 3 wirkt das Licht auf den Betrachter inhomogen. Aber durch die Kontinuität des Wellenverlaufs entsprechend dem Beispiel von Fig. 3 entsteht ein harmonischer Lichteindruck.

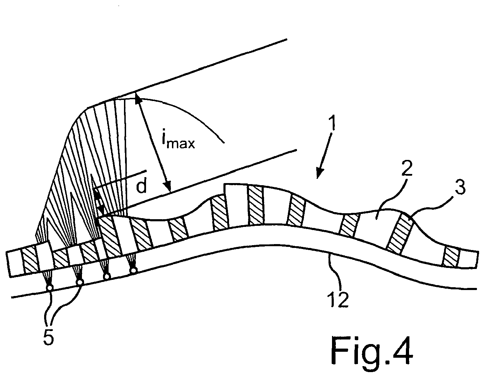

Die erste Platte 1 ist in den obigen Beispielen immer eben und flach dargestellt. Die erste Platte 1 muss aber nicht flach sein, sondern kann vielmehr sowohl an der Unterseite als auch an der Oberseite gekrümmt sein, wie dies beispielhaft in Fig. 4 dargestellt ist. Beispielsweise besitzt die erste Platte 1 eine leistenförmige Gestalt und verläuft entlang einer gekrümmten Innenkontur 12 einer Fahrzeugtür oder eines Fahrzeughimmels. Wird ein bestimmtes Helligkeitsprofil beziehungsweise eine bestimmte Intensitätsverteilung 10 gewünscht, so muss die Steuereinrichtung 6 die Kontur der ersten Platte 1 berücksichtigen. Um die gewünschte Intensitätsverteilung zu erreichen, können aber auch die Schichtdicken, d. h. die Dicken der transparenten Elemente 2 und der nicht transparenten Elemente 3 (d. h. der transparenten und nicht transparenten Schichten) in geeigneter Weise gewählt werden. In Abhängigkeit von der Breite der einzelnen Schichten entsteht dann in einem Abstand von mehr als d ein homogener Lichteindruck. Die Intensität besitzt über mehrere Schichten beziehungsweise Elemente 2, 3 hinweg beispielsweise in etwa den Maximalwert iₘₐₓ. Bei dem Lauflicht ist dann ständig die Kontur der ersten Platte 1 für die aktuelle Ansteuerung der Leuchtelemente 5 zu berücksichtigen.

Im Falle einer Gefährdung kann das Licht der Leuchtelemente komplett oder in Gruppen ein- beziehungsweise umgeschaltet werden. Insbesondere kann bei Gefährdung die Farbe gewechselt werden.

Es wird somit eine Leuchtvorrichtung mit gezielt inhomogener aber harmonischer Ausleuchtung realisierbar. Trotz der intransparenten Abschnitte in der Dekorplatte kann ein gewünschtes Helligkeitsprofil eingestellt werden und es kann damit sogar ein animiertes Lauflicht bereitgestellt werden. Insbesondere kann die Leuchtvorrichtung auch eine Warnfunktion übernehmen.

Die Warnfunktion kann allgemein dadurch realisiert werden, dass die Steuervorrichtung ein Signal überprüft. Erfüllt das Signal eine vorgegebene Bedingung, so steuert die Steuervorrichtung eine dafür vorgesehene Leuchtvorrichtung an. Die Leuchtvorrichtung besitzt den Aufbau, wie er oben geschildert wurde.

Warnfunktionen sind, wie oben bereits angedeutet wurde, insbesondere für Fahrerassistenzsysteme hilfreich. So kann die obige Leuchtvorrichtung beispielsweise für einen "Abstandswarner" eingesetzt werden. Der "Abstandswarner" kontrolliert ständig, ob ein bestimmter Abstand zum Vordermann eingehalten wird. Die Kontrolle erfolgt beispielsweise mittels Radar. Wird ein Mindestabstand unterschritten, so muss der Fahrer in geeigneter Weise gewarnt werden. Dies kann hier beispielsweise mittels der geschilderten Leuchtvorrichtung unterhalb der Windschutzscheibe, am Armaturenbrett oder dergleichen erfolgen.

Die erfindungsgemäße Leuchtvorrichtung kann auch für ein Fahrerassistenzsystem "Überholwarner" genutzt werden. Dabei tastet beispielsweise ein Radarstrahl den hinteren Bereich eines Kraftfahrzeugs ab. Wird ein überholendes Fahrzeug festgestellt und hat das eigene Fahrzeug den Blinker auf die Spur des überholenden Fahrzeugs gesetzt oder wird ein Lenkwinkel des eigenen Fahrzeugs in Richtung auf die Spur des überholenden Fahrzeugs registriert, so kann eine entsprechende Überholwarnung optisch abgegeben werden. Dies erfolgt beispielsweise dadurch, dass ein Lauflicht an der Innenseite der Tür an der Seite des überholenden Fahrzeugs einen Überholvorgang andeutet. Beispielsweise kann dies durch ein rotes Lauflicht erfolgen, das sich in Fahrtrichtung nach vorne bewegt.

Eine weitere Anwendungsmöglichkeit der erfindungsgemäßen Leuchtvorrichtung bei einem Fahrerassistenzsystem wäre der Einsatz bei einem "Ausstiegsassistenten". Hält das Fahrzeug beispielsweise neben einem Fahrradweg an, und ein Insasse will aussteigen, so kann mit einer entsprechenden Beleuchtung der Tür angezeigt werden, ob ein gefahrloses Öffnen der Tür möglich ist oder nicht. Wenn keine Gefahr besteht, so kann die Tür beispielsweise innen grün beleuchtet werden, während sie bei Gefahr, d. h. beispielsweise bei einem sich nähernden oder bei einem vorbeifahrenden Fahrrad, rot leuchtet (optional animiert).

Auch andere Fahrerassistenzsysteme können mit der erfindungsgemäßen Leuchtvorrichtung ausgestattet werden. Dabei kann die Leuchtvorrichtung in der Fläche sehr groß ausgebildet sein, da sie bei Nichtgebrauch ein hochwertiges Dekorelement darstellt.

## Patentansprüche

1. Leuchtvorrichtung für ein Kraftfahrzeug mit
- einer ersten Platte (1), die eine Unterseite (7) und eine Oberseite (8) aufweist, und
- mehreren Leuchtelementen (5), die die erste Platte (1) von der Unterseite (7) her beleuchten,
wobei
- die erste Platte (1) eine Vielzahl transparenter und nicht transparenter Elemente (2, 3) aufweist, die abwechselnd, aneinander angeordnet sind, und die jeweils vollständig von der Unterseite (7) zu der Oberseite (8) reichen, und
- die Leuchtelemente (5) von einer Steuereinrichtung (6) angesteuert sind und die Steuereinrichtung dazu ausgebildet ist, in einem Raum an der Oberseite (8) der ersten Platte (1) einen vorgebbaren örtlichen Intensitätsverlauf (10) zu erzielen,
- wobei zwischen den mehreren Leuchtelementen (5) und der ersten Platte (1) eine teiltransparente zweite Platte (9) angeordnet ist.

2. Leuchtvorrichtung nach Anspruch 1, wobei mit der Steuereinrichtung (6) die Leuchtelemente (5) so ansteuerbar sind, dass mit den Leuchtelementen (5) ein Lauflichteffekt erzielt wird.

3. Leuchtvorrichtung nach Anspruch 1 oder 2, wobei mit der Steuereinrichtung (6) die Lichtintensität oder Farbe der einzelnen Leuchtelemente (5) oder von mehreren der Leuchtelemente variierbar ist.

4. Leuchtvorrichtung nach einem der vorhergehenden Ansprüche, wobei die Steuereinrichtung (6) einen Eingang zum Aufnehmen eines Sensorsignals aufweist, und die Leuchtelemente (5) in Abhängigkeit von dem Sensorsignal steuerbar sind.

5. Leuchtvorrichtung nach einem der vorhergehenden Ansprüche, wobei mit der Steuereinrichtung (6) die Leuchtelemente (5) so ansteuerbar sind, dass mehrere der Leuchtelemente (5) einen kontinuierlichen Intensitätsverlauf (10) zwischen der Intensität Null und einem vorgegebenen Maximalwert bewirken, wobei der Intensitätsverlauf (10) einer Gaußverteilung entspricht und die Leuchtelemente (5) durch Ansteuerung den Intensitätsverlauf (10) darstellen.

6. Leuchtvorrichtung nach einem der vorhergehenden Ansprüche, wobei mit der Steuereinrichtung (6) die Leuchtelemente (5) so ansteuerbar sind, dass sich ein wellenförmiger Intensitätsverlauf (10) des von den Leuchtelementen (5) abgestrahlten Lichts ergibt.

7. Leuchtvorrichtung nach einem der vorhergehenden Ansprüche, wobei mit der Steuereinrichtung (6) die Leuchtelemente (5) so ansteuerbar sind, dass sich ein vorgebbarer Intensitätsverlauf (10) des von den Leuchtelementen (5) abgestrahlten Lichts in einer Richtung, in der die Leuchtelemente angeordnet sind, zeitlich fortbewegt.

8. Fahrerassistenzsystem mit einer Leuchtvorrichtung gemäß einem der vorhergehenden Ansprüche, wobei mit Hilfe der Leuchtvorrichtung ein optischer Warnhinweis erzeugbar ist.

9. Kraftfahrzeug mit einem Fahrerassistenzsystem nach dem vorhergehenden Anspruch, wobei die Leuchtvorrichtung in einer Tür oder am Himmel des Kraftfahrzeugs angeordnet ist.

## Claims

1. Lighting device for a motor vehicle with
- a first panel (1), which has an underside (7) and an upper side (8), and
- a plurality of lighting elements (5), which illuminate the first panel (1) from the underside (7),
wherein
- the first panel (1) has a plurality of transparent and non-transparent elements (2, 3), which are arranged adjacent to each other in an alternating fashion, and which each extend completely from the underside (7) to the upper side (8), and
- the lighting elements (5) are actuated by a control device (6) and the control device is designed to bring about a predefinable spatial brightness profile (10) in a space on the upper side (8) of the first panel (1),
- wherein a partially transparent second panel (9) is arranged between the plurality of lighting elements (5) and the first panel (1).

2. Lighting device according to claim 1, wherein the lighting elements (5) can be actuated with the control device (6) such that a running light effect is achieved with the lighting elements (5).

3. Lighting device according to claim 1 or claim 2, wherein the light intensity or colour of the individual lighting elements (5) or of a plurality of the lighting elements can be varied with the control device (6).

4. Lighting device according to any one of the preceding claims, wherein the control device (6) has an input for receiving a sensor signal, and the lighting elements (5) can be controlled depending on the sensor signal.

5. Lighting device according to any one of the preceding claims, wherein the lighting elements (5) can be actuated with the control device (6) such that a plurality of the lighting elements (5) produce a continuous brightness profile (10) between the brightness zero and a predefinable maximum value, wherein the brightness profile (10) corresponds to a normal distribution and the lighting elements (5) represent the brightness profile (10) through actuation.

6. Lighting device according to any one of the preceding claims, wherein the lighting elements (5) can be actuated with the control device (6) such that a wave-shaped brightness profile (10) of the light emitted by the lighting elements (5) is produced.

7. Lighting device according to any one of the preceding claims, wherein the lighting elements (5) can be actuated with the control device (6) such that a predefinable brightness profile (10) of the light emitted by the lighting elements (5) moves along in time in a direction in which the lighting elements are arranged.

8. Driver assistance system with a lighting device according to any one of the preceding claims, wherein an optical warning can be generated with the aid of the lighting device.

9. Motor vehicle with a driver assistance system according to the preceding claim, wherein the lighting device is arranged in a door or on the ceiling of the motor vehicle.

## Revendications

1. Dispositif lumineux pour un véhicule automobile avec
- une première plaque (1), qui présente un côté inférieur (7) et un côté supérieur (8), et
- plusieurs éléments lumineux (5), qui éclairent la première plaque (1) depuis le côté inférieur (7),
dans lequel
- la première plaque (1) présente une pluralité d'éléments transparents et non transparents (2, 3), qui sont agencés l'un contre l'autre en alternance, et qui vont respectivement complètement du côté inférieur (7) au côté supérieur (8), et
- les éléments lumineux (5) sont commandés par un dispositif de commande (6) et le dispositif de commande est réalisé de sorte à obtenir dans un espace au niveau du côté supérieur (8) de la première plaque (1) une courbe d'intensité (10) locale pouvant être prédéfinie,
- dans lequel une deuxième plaque partiellement transparente (9) est agencée entre les plusieurs éléments lumineux (5) et la première plaque (1).

2. Dispositif lumineux selon la revendication 1, dans lequel les éléments lumineux (5) peuvent être commandés avec le dispositif de commande (6) de sorte qu'un effet de chenillard est obtenu avec les éléments lumineux (5).

3. Dispositif lumineux selon la revendication 1 ou 2, dans lequel l'intensité lumineuse ou la couleur des éléments lumineux individuels (5) ou de plusieurs des éléments lumineux peut être modifiée avec le dispositif de commande (6).

4. Dispositif lumineux selon l'une quelconque des revendications précédentes, dans lequel le dispositif de commande (6) présente une entrée pour la réception d'un signal de capteur, et les éléments lumineux (5) peuvent être commandés en fonction du signal de capteur.

5. Dispositif lumineux selon l'une quelconque des revendications précédentes, dans lequel les éléments lumineux (5) peuvent être commandés avec le dispositif de commande (6) de sorte que plusieurs des éléments lumineux (5) entraînent une courbe d'intensité continue (10) entre l'intensité nulle et une valeur maximum prédéfinie, dans lequel la courbe d'intensité (10) correspond à une distribution de Gauss, et les éléments lumineux (5) représentent par commande la courbe d'intensité (10).

6. Dispositif lumineux selon l'une quelconque des revendications précédentes, dans lequel les éléments lumineux (5) peuvent être commandés avec le dispositif de commande (6) de sorte à obtenir une courbe d'intensité ondulée (10) de la lumière émise par les éléments lumineux (5).

7. Dispositif lumineux selon l'une quelconque des revendications précédentes, dans lequel les éléments lumineux (5) peuvent être commandés avec le dispositif de commande (6) de sorte qu'une courbe d'intensité (10) pouvant être prédéfinie de la lumière émise par les éléments lumineux (5) dans une direction, dans laquelle les éléments lumineux sont agencés, se déplace dans le temps.

8. Système d'assistance au conducteur avec un dispositif lumineux selon l'une quelconque des revendications précédentes, dans lequel un avertissement optique peut être généré à l'aide du dispositif lumineux.

9. Véhicule automobile avec un système d'assistance au conducteur selon la revendication précédente, dans lequel le dispositif lumineux est agencé dans une porte ou sur le ciel du véhicule automobile.
